# EUROPEAN PATENT APPLICATION

(11) **EP 2 533 093 A1**
(43) Date of publication of application: **12.12.2012**
(21) Application number: 12004266.8
(22) Date of filing: 05.06.2012
(51) Int. Cl.: G02B 23/10, G02B 23/12, H04N 5/33

(54) **Gps/compass imager for viewing systems**

(30) Priority: 07.06.2011 US 201161520287 P
(71) Applicant: OPTICS 1, INC., Westlake Village, CA 91362 (US)
(72) Inventor: Brillhart, Steven, A., Chester, NH 03036 (US)
(74) Representative: Sawodny, Michael-Wolfgang

(57) **Abstract**

An imager system for use with an image-intensified viewing system having an objective lens and an image-intensified viewing channel, comprising: a display head that includes an electronic compass that generates an electronic compass signal representative of compass information, a display, control electronics electrically connected to the display and the electronic compass, and an optical unit operably arranged relative to the display and that supports a collimating lens configured to combine with the objective lens to form an imaging optical system; a GPS/power unit electrically connected to the optical head via a cable and configured to generate and provide a GPS signal and electrical power to the optical head, the GPS signal being representative of GPS information; and wherein the control electronics is configured to receive the compass and GPS signals and display the compass information and GPS information on the display.

## Description

### CLAIM OF PRIORITY

This application claims the benefit of priority under 35 U.S.C. § 119(e) of U.S. Provisional Application Serial No 61/520,287, filed on June 07, 2011.

### FIELD

The present disclosure relates generally to viewing systems, including image-intensified viewing systems, and in particular relates to a GPS/compass imager that images compass and GPS information to a viewing system so that it is viewable by a viewer over an viewing channel.

### BACKGROUND ART

Different types of viewing systems allow a user to view an image of a target or an area of interest over either a single viewing channel or over two viewing channels. Certain viewing systems employ image intensification, such as night-vision systems that intensify low light levels in the visible and near infrared wavelength range so that an image of a dimly lit scene can be made readily visible to a viewer. Other vision systems employ image fusion whereby images are formed at different wavelengths (or wavelength bands) and the different images are fused together to form a composite image. Examples of image-intensified viewing systems are disclosed in US. Patent No. 7,541,581 (the '581 patent).

When viewing a target or scene with an image-intensified viewing system, it can be useful to have information displayed in the viewing field in addition to the actual scene being viewed. However, it is also desirable to avoid adding complexity, expense and weight directly to the viewing system itself when seeking to achieve the added functionality. An example where thermal imaging functionality was added to an image-intensified viewing system is the "clip on" thermal imager described in the '581 patent.

There are a number of other desirable functionalities besides thermal imaging that can be useful to add to an existing image-intensified viewing system in a modular and clip-on fashion. However, each functionality presents its own unique challenges and design issues.

### SUMMARY

Aspects of the GPS/compass imager system disclosed herein provides GPS and compass functionality to a viewing system, which in an example is an image-intensified viewing system (e.g., night-vision binoculars, night-vision goggles, fusion viewing systems, etc) without modifying the viewing system or substantially obscuring the viewed scene. In an example, external information beyond the compass and GPS information generated by the GPS/compass imager system is provided to the viewing system. Such external information includes, for example, computer information (which can include Internet information) and video information.

An aspect of the disclosure is an imager system for use with a viewing system having an objective lens and a viewing channel. The system includes a global positioning system (GPS)/power unit configured to provide electrical power and including a GPS unit configured to generate a GPS signal representative of GPS information. The system also includes a display head electrically connected to the GPS/power unit and configured to receive the GPS signal and electrical power. The system further includes a mounting device configured to adjustably and removably attach the display head to the viewing system. The display head further includes a compass unit configured to generate a compass signal representative of compass information, a display, a control electronics unit electrically connected to the compass unit and the display, the control electronics configured to control the display and compass unit, and an optical unit having a collimating lens that, in combination with the objective lens, defines an imaging optical system that forms a display image of the display within the viewing optical system so that the displayed GPS information and compass information is viewable over the viewing channel.

Another aspect of the disclosure is the imager system as described above, wherein the viewing channel is image-intensified.

Another aspect of the disclosure is the imager system as described above, wherein the viewing system comprises an image-intensified night-vision system.

Another aspect of the disclosure is the imager system as described above, wherein the GPS/power unit further comprises at least one of a video port configured to receive an external video signal representative of video information, and a PC communication port configured to receive an external PC I/O signal representative of computer information, with at least one of the external video signal and external PC signal provided to the display head so that at least one of the video information and the computer information is displayed on the display for viewing over the viewing channel.

Another aspect of the disclosure is the imager system as described above, wherein the display head is electrically connected to the GPS/power unit by an electrical cable.

Another aspect of the disclosure is the imager system as described above, wherein the GPS/power unit includes a battery pack configured to operably contain at least one battery.

T Another aspect of the disclosure is the imager system as described above, wherein the display head has an actuator unit electrically connected to the control electronic unit and configured to activate the display head.

Another aspect of the disclosure is the imager system as described above, wherein the display has an adjustable brightness and further comprising the actuator unit being configured to adjust the display brightness.

Another aspect of the disclosure is the imager system as described above, wherein the imaging optical system includes a light-turning element operably supported within the display head.

Another aspect of the disclosure an imager system for use with an image-intensified viewing system having an objective lens and an image-intensified viewing channel. The system includes a display head that includes an electronic compass that generates an electronic compass signal representative of compass information, a display, control electronics electrically connected to the display and the electronic compass, and an optical unit operably arranged relative to the display and that supports a collimating lens configured to combine with the objective lens to form an imaging optical system. A GPS/power unit is electrically connected to the optical head via a cable and is configured to generate and provide a GPS signal and electrical power to the optical head, the GPS signal being representative of GPS information. The control electronics is configured to receive the compass and GPS signals and display the compass information and GPS information on the display.

Another aspect of the disclosure is the imager system as described above, further including an adjustable mounting device configured to adjustably and removably mount the display head to the image-intensified viewing system.

Another aspect of the disclosure is the imager system as described above, wherein the image-intensified viewing system has an image intensifier, and wherein the display head is adjustably and removably mounted to the image-intensified viewing system so that the collimating lens and the object lens define the imaging optical system and form a display image on the image intensifier, which forms an intensified display image and an intensified scene image that are both viewable over the image-intensified viewing channel.

Another aspect of the disclosure is the imager system as described above, wherein the display image includes external information provided through the GPS/power unit.

Another aspect of the disclosure is the imager system as described above, further including the GPS/power unit having at least one port configured to receive an external signal representative of the external information, the external signal being relayed to the display head via the cable and displayed on the display.

Another aspect of the disclosure is a method of displaying GPS information and compass information over an image-intensified viewing channel of an image-intensified viewing system having an objective lens and an image intensifier. The method includes generating, in a display head, a compass signal representative of compass information. The method also includes generating, in a GPS/power unit, a GPS signal representative of GPS information and sending the GPS signal to the display head. The method additionally includes displaying the compass information and GPS information on a display within the display head. The method further includes operatively arranging the display head relative to the objective lens. The method also includes optically communicating compass information and GPS information on the display to the image-intensified viewing system so that the GPS information and the compass information are viewable over the image-intensified viewing channel.

Another aspect of the disclosure is the method as described above, and further including passing an external signal through the GPS/power unit to the display head, the external signal representative of external information, and displaying the external information on the display.

Another aspect of the disclosure is the method described above, and further including the external signal representing at least one of computer information and video information.

Another aspect of the disclosure is the method described above, and further including forming a display image on the image intensifier using a collimating lens within the display head in combination with the objective lens.

Another aspect of the disclosure is the method described above, and further including providing the collimating lens with a light-turning element.

Another aspect of the disclosure is the method described above, and further including operatively arranging the display head relative to the objective lens by adjustably and removably mounting the display head to an input-end portion of the image-intensified viewing system.

Another aspect of the disclosure is the method described above, and further generating the electrical power in the GPS/power unit using at least one battery operably housed in the GPS/power unit.

Another aspect of the disclosure is the method described above, and further including the GPS/power unit either generating electrical power and providing the electrical power to the display head, or passing electrical power from an external power source to the display head.

Another aspect of the disclosure is the method described above, and further including the image-intensified viewing channel including an intensified image of a scene that is viewable along with the compass information and the GPS information.

Additional features and advantages of the disclosure are set forth in the detailed description that follows, and in part will be readily apparent to those skilled in the art from that description or recognized by practicing the disclosure as described herein, including the detailed description that follows, the claims, as well as the appended drawings.

It is to be understood that both the foregoing general description and the following detailed description present embodiments of the disclosure and are intended to provide an overview or framework for understanding the nature and character of the disclosure as it is claimed. The accompanying drawings are included to provide a further understanding of the disclosure, and are incorporated into and constitute a part of this specification. The drawings illustrate various embodiments of the disclosure, and together with the description serve to explain the principles and operations of the disclosure. The claims as set forth below are incorporated into and constitute part of this specification.

### BRIEF DESCRIPTION OF THE DRAWINGS

FIG. 1 is a schematic diagram of an example clip-on GPS/compass imager system according to the disclosure;

FIG. 2A is a side view of the display head of the GPS/compass imager system, wherein the display head includes an example adjustable mounting device;

FIG. 2B is a close-up view of an example ring-based adjustable mounting device that provides clip-on functionality;

FIG. 3A is a front-elevated view of the display head as mounted onto an image-intensified viewing system in the form of night-vision goggles;

FIG. 3B is a close-up side view of the display head and an input-end portion of the night-vision goggles of FIG. 3A;

FIG. 4 is a schematic diagram of the display head as operably arranged relative to an image-intensified viewing system having two image-intensified viewing channels;

FIG. 5A is a schematic diagram of the viewing field of an image-intensified viewing channel, with only the intensified display image shown, wherein the intensified display image has compass information in the form of a compass reading and GPS information in the form of standard GPS coordinates;

FIG. 5B is similar to FIG. 5A, but wherein the viewing field further includes the intensified image of the viewed scene; and

FIG. 5C is similar to FIG. 5B, but with the intensified display image further including example external information in the form of computer information and video-streamed information.

### DETAILED DESCRIPTION

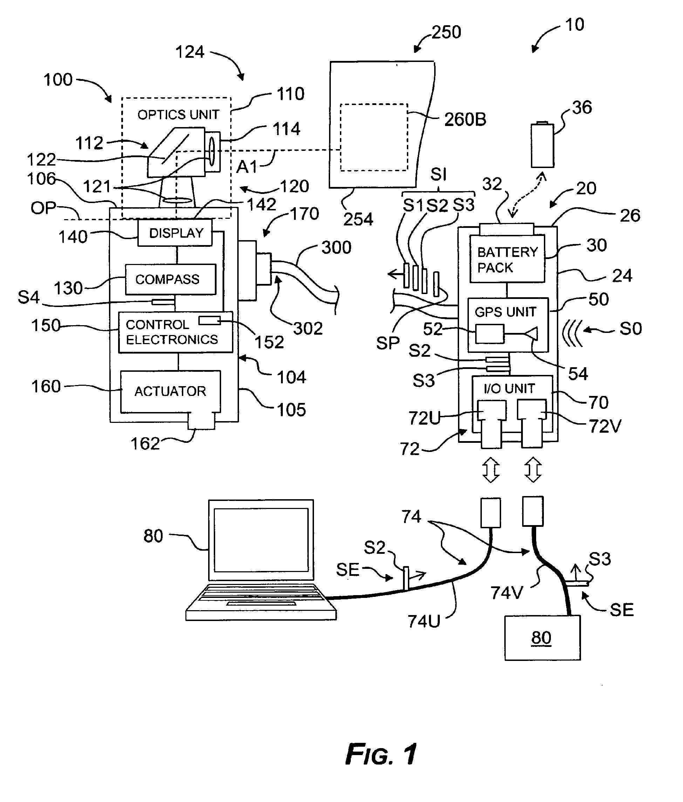

FIG. 1 is a schematic diagram of an example GPS/compass imager system ("system") 10 according to the disclosure. System 10 includes a GPS/power unit 20 electrically connected to a display head 100 by an electrical cable 300. In an example, cable 300 is configured to carry both electrical signals SI that carry information (e.g., signals S1 through S3) and electrical power signals SP that carry electrical power. FIG. 1 shows an input-end portion 254 of a viewing system 250 to which system 10 can be operably connected, as discussed in greater detail below. In the examples discussed below, viewing system 250 is image-intensified, but more generally can also be a non-image-intensified viewing system.

### GPS/power unit

GPS/power unit 20 includes a housing 24 with an end 26. Housing 24 operably supports a battery pack unit 30 that includes a removable cap 32 at housing end 26. Battery pack unit 30 is configured to operably support at least one battery 36, e.g., a lithium 123 battery, which in an example of system 10 is estimated to yield about 10-12 hours of system operation at room temperature. In an example, housing 24 is made to withstand relatively harsh field conditions, e.g., is made substantially waterproof and of a light-weight yet sturdy material such machined aluminum, plastic, KEVLAR or a combination thereof.

GPS/power unit 20 also includes a GPS unit 50 electrically connected to battery pack unit 30 to receive electrical power therefrom. GPS unit 50 includes GPS electronics 52 operably coupled to a GPS antenna 54. GPS antenna 54 is configured to receive a raw electromagnetic GPS signal S0 from orbiting GPS satellites (not shown) and provide an electrical version of this raw GPS signal to GPS electronics 52. GPS electronics 52 is configured to process this raw electrical GPS signal from GPS antenna 54 and generate an electrical GPS coordinate signal ("GPS signal") S1. In an example, GPS unit 50 is a commercially available GPS unit.

GPS/power unit 20 includes an input/output (I/O) unit 70 that is electrically connected to GPS unit 50. In an example, I/O unit 70 includes one or more ports 72 configured to receive at least one external signal SE (e.g., electrical signals S2 and S3) from an external device 80. The at least one external signal SE is representative of external information, i.e., information that is not generated within system 10 (compass information and GPS information would be considered internal information). In an example, the one or more ports 72 include a video port 72V and a USB port 72U, as shown. In an example, one or more ports 72 can be connected (e.g., via one or more cables 74) to respective one or more external devices 80. For example, USB and video ports 72U and 72V can be electrically connected to respective external devices 80 via corresponding USB and video cables 74U and 74V. In another example not shown, GPS/power unit 20 can be configured to wirelessly receive external information. Power can also be externally provided to GPS/power unit 20, such as from external device 80 via USB cable 74U for example, or from a vehicle the user of system 10 might be using.

In an example, external device 80 can include a computer (e.g., a laptop computer, as shown) that generates an external signal S2 (USB, RS-232, etc.) representative of computer information, while another external device can comprise a video system that generates an external video signal S3 representative of video information. GPS signal S1, computer signal S2 and video signal S3 are transmitted by cable 300 to display head 100. These signals can all be combined onto one cable using multiplexing techniques. Also, in a example, an electrical power signal SP is provided from battery pack unit 30 to display head 100 via cable 300.

Here, the term "computer information" generally includes but is not limited to any computer-related information that can be transmitted by a computer via an I/O port. In an example, "computer information" includes Internet information, i.e., information obtained from the Internet and communicated by a computer. Other information can be provided as computer information (or other information), such as map information, network information, received object location/direction information and the like.

### Display head

With continuing reference to FIG. 1, display head 100 includes a housing 104 that includes a side 105 and a top end 106. Display head 100 also includes an optics unit 110 that extends from display head top end 106 and that includes an optics unit housing 112 with an output end 114. In an example, optics unit 110 is a small, periscope-like extension from housing 104. Optics unit 110 supports a collimating lens 120 that in an example includes one or more lens elements 121 and a light-turning element 122 operably arranged along an optical axis A1. Light-turning element 122 may be, for example, a fold mirror, a beam splitter, corner cube, prism or the like. Collimating lens 120 and objective lens 260B (introduced and discussed below) comprise an imaging optical system 124 that includes an object plane OP when optics unit 110 is operably disposed adjacent the objective lens. The operation of optics unit 110 is discussed in greater detail below. Collimating lens 120 can also be referred to as an imaging lens since it participates in the image-formation process, as discussed below.

Display head 100 further includes a compass unit ("compass") 130 and a display unit ("display") 140. Compass unit 130 is electrically connected to display unit 140 and is configured to generate compass information (e.g., a compass heading or compass reading) based on the orientation of the display head 100. An example compass unit 130 comprises a three-axis, tilt-compensated digital magnetic compass (DMC). The generated compass information is represented by a compass signal S4. In an example, display 140 comprises a micro-display. Display 140 includes a display surface 142 that resides at or near object plane OP of optical imaging system 124.

Display head 100 further includes a control electronics unit 150 ("control electronics") and an actuator unit ("actuator") 160. Control electronics 150 is generally configured (e.g., via a programmable processor 152) to control the operation of display head 100. Control electronics 150 is electrically connected to display 140, compass 130, and actuator 160. Control electronics 150 is configured to perform at least one of the following functions: formatting display 140; receiving and processing electrical GPS signals S1; receiving and processing external electrical signals SE (e.g., electrical USB signals S2 and electrical video signals S3); receiving and processing electrical compass signals S4; and performing power conversion of electrical power (i.e., electrical signals SP) provided from battery pack unit 30 via cable 300.

Actuator unit 160 includes a power switch 162 and is configured to activate and de-activate display head 100 (e.g., turn it on and off) via the power switch. In an example, power switch 162 is optionally configured to perform one or more additional functions. For example, power switch 162 may also be configured to control the brightness of display 140 by a rotary adjustment. Temporary brightness control of display 140 may also be accomplished via power switch 162, e.g., by depressing the power switch.

Display head 100 also includes a cable port 170 arranged on display head housing 104 on side 105. Cable port 170 is configured to receive and support cable 300 at a cable end portion 302. An alternate embodiment of cable port 170 includes a connector (adapter) to facilitate connecting and disconnecting the cable.

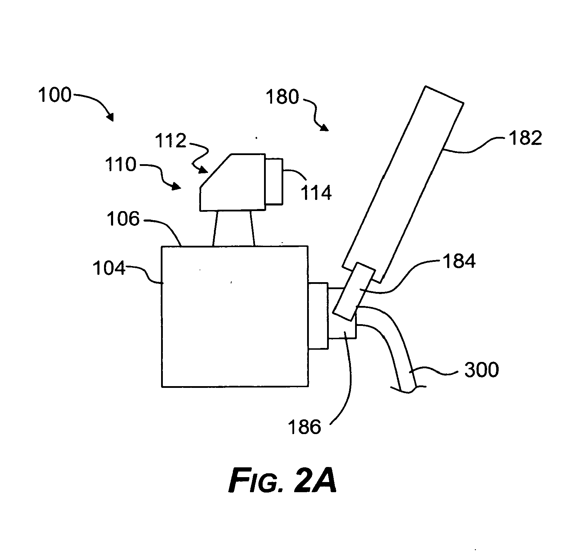

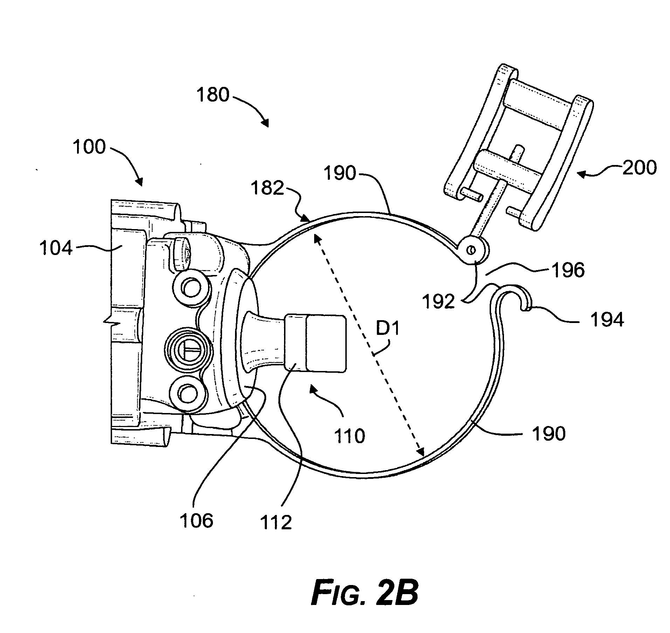

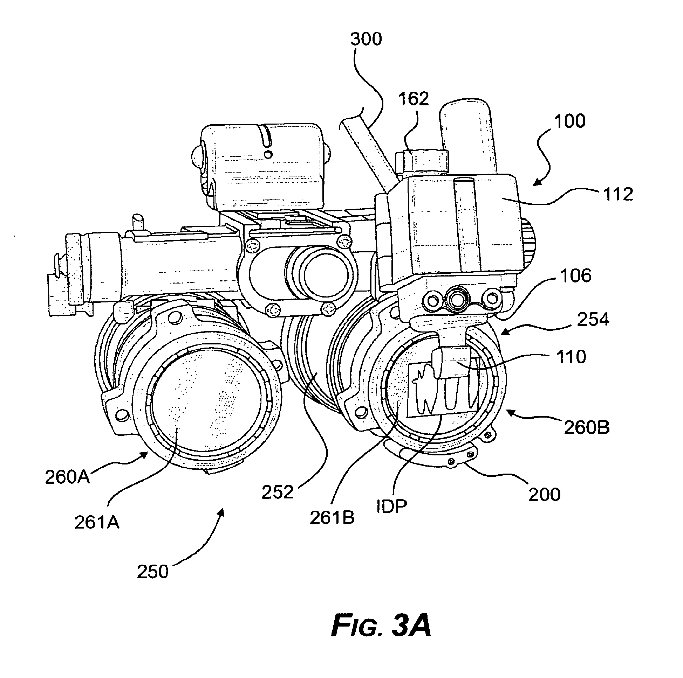

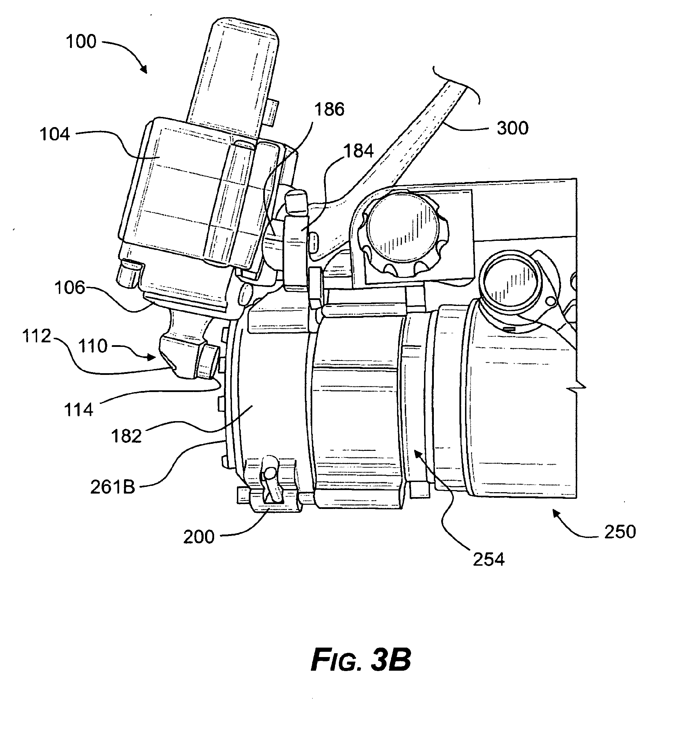

With reference to FIG. 2A and FIG. 2B, display head 100 further includes adjustable mounting device 180 configured to allow for adjustable and removable mounting (including "clip-on" mounting) of the display head to an input-end portion 254 of image-intensified viewing system 250. FIG. 3A is a front-elevated view of display head 100 as mounted onto image-intensified viewer system 250 in the form of night-vision goggles, while FIG. 3B is a close-up side view of the mounted display head of FIG. 3A. Different mounting devices 180 can be employed for different viewing systems 250.

In an example, adjustable mounting device 180 includes a mounting ring 182 that at one end includes a mounting flange 184 configured to engage a mounting bracket 186 supported by housing 104 at side 105. In an example, mounting bracket 186 is configured to define at least a portion of cable port 170.

With reference to FIG. 2B, in an example, mounting ring 182 is generally sized to have an inside diameter D1 that accommodates (e.g., slides over) input-end portion 254 of image-intensified viewing system 250. Mounting ring 182 includes two sections 190 having respective ends 192 that define a gap 196 in the mounting ring. In an example, a pivotable locking member or latch 200 is attached to one end 192 of one ring section, while the other end of the other ring section is configured with a flange 194. Latch 200 is configured to matingly engage flange 194 and adjusted to urge the ends 192 of sections 190 together to reduce the size of gap 196. The result is that mounting ring 182 tightens around the input-end portion 254 of image-intensified viewing system 250. In an example, latch 200 is in the form of a hand-adjustable clip that can quickly be engaged and disengaged with flange 194 so that display head 100 can be clipped onto and removed from image-intensified viewing system 250.

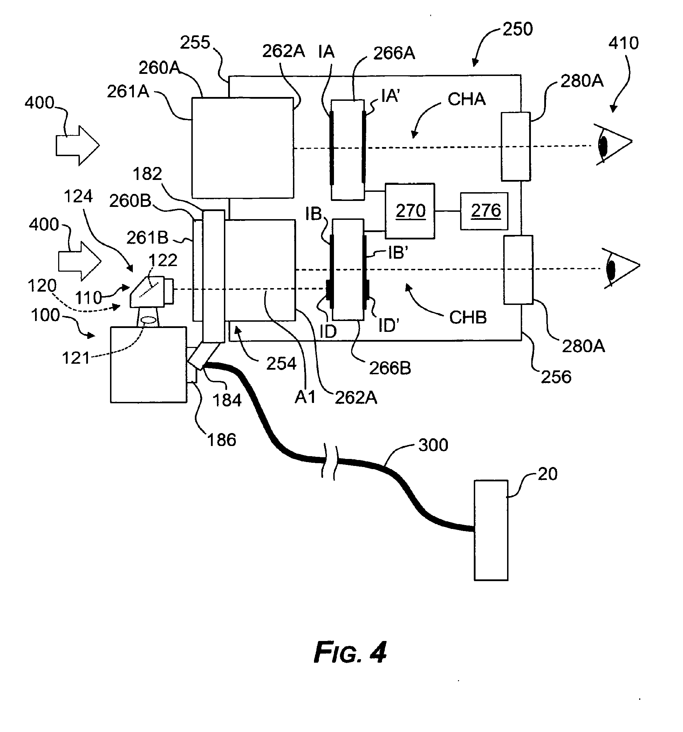

FIG. 4 is a schematic diagram of display head 100 as operably arranged relative to an example image-intensified viewing system 250 in the form of night-vision binoculars or goggles. Image-intensified viewing system 250 includes a housing 252 that includes the aforementioned input-end portion 254 at a front end 255. Housing 252 also has a rear end 256. Image-intensified viewing system 250 of FIG. 4 is shown by way of example as a binocular-type or goggle-type night-vision viewing system, such as that shown in FIG. 3A and FIG. 3B. It is noted here that image-intensified viewing system 250 can in some embodiments be replaced with a non-image-intensified viewing system, such as ordinary binoculars. For example, the ordinary binoculars may contain a reticle upon which the GPS and compass information of the display image can be displayed and viewed by a viewer.

With reference also to FIG. 3A and FIG. 3B, image-intensified viewing system 250 includes objective lenses 260A and 260B having respective input ends 261A, 261 B and respective output ends 262A, 262B. Objective lenses 260A and 260B are optically coupled to respective image intensifiers 266A and 266B. Image intensifiers 266A and 266B are electrically connected to control circuitry 270, which in turn is electrically connected to a power source 276. Eyepieces 280A and 280B are operatively arranged at housing rear end 256 and in cooperation with respective image intensifiers 266A and 266B. Thus, objective lens 260A, image intensifier 266A and eyepiece 280A define an image-intensified viewing channel CHA, while objective lens 260B, image intensifier 266B and eyepiece 280B define an image-intensified viewing channel CHB.

Display head 100 of system 10 is removably attached to image-intensified viewing system 250 at input-end portion 254 via adjustable mounting device 180 so that display head 100 is operatively arranged relative to objective lens 260A, i.e., with output end 114 of optics unit housing 112 adjacent and facing input end 261 A of objective lens 260A.

In operation, light 400 from a target or scene enters object lenses 260A and 260B, with a small portion (e.g., 5% to 15%) of the light blocked by optics unit housing 112. Objective lenses 260A and 260B form respective scene images IA and IB on image intensifiers 266A and 266B, which form corresponding intensified scene images IA' and IB'. Intensified scene images IA' and IB' are then viewed by a viewer 410 via eyepieces 280A and 280B.

Meanwhile, display head 100 receives electrical power signal SP from GPS/power unit 20, along with at least one of electrical GPS coordinate signal S1, electrical USB signal S2 and electrical video signal S3. Control electronics 150 receives and processes the electrical signals S1, S2, and S3 provided by GPS/power unit 20, and also receives and processes electrical compass signal S4 as described above. The information embodied in at least one of the informational electronic signals S1 through S4 is then provided to display 140. Imaging optical system 124 then forms a display image ID of display surface 142 on image intensifier 266B. Note that FIG. 3A shows a reflection of a partially formed display image IDP in the process of the display image ID being formed at image intensifier 266B.

Display image ID is intensified by image intensifier 266B to form an image-intensified display image ID', which is visible to viewer 410 in image-intensified channel CHB along with intensified scene image IB' of channel CHB and intensified scene image IA' of channel CHA.

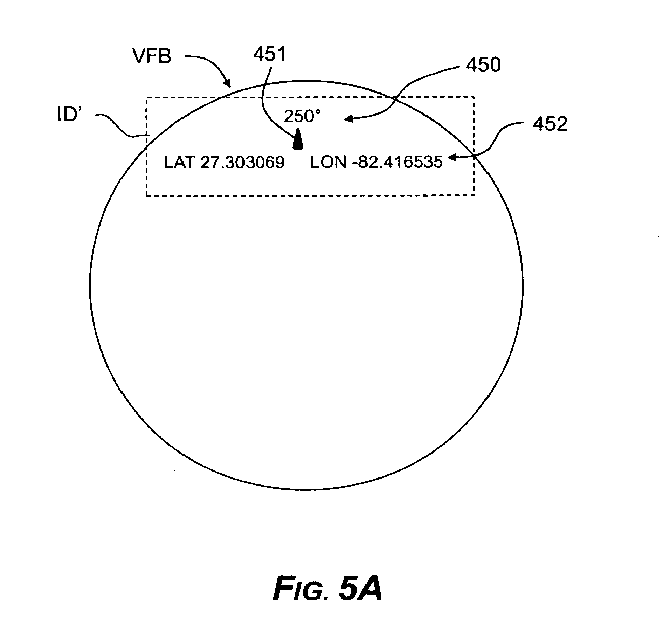

FIG. 5A is a schematic diagram of the viewing field VFB as seen by viewer 410 viewing image-intensified channel CHB, with the viewing field just showing example compass information and GPS information, and omitting intensified scene image IB' for ease of illustration. Viewing field VFB shows indicia 450 representative of a compass reading or heading of say "250°" and indicia 452 representative of example GPS coordinates of say "LAT 27.303069 LON - 82.416535" where LAT is latitude and LON is longitude. A military grid coordinate system can also be displayed as GPS indicia 452. Display image ID may also include other display features not shown, such as the remaining power in battery 36. Note that the example compass information indicia 450 includes a reference arrow 451 by way of example to more clearly indicate the compass heading.

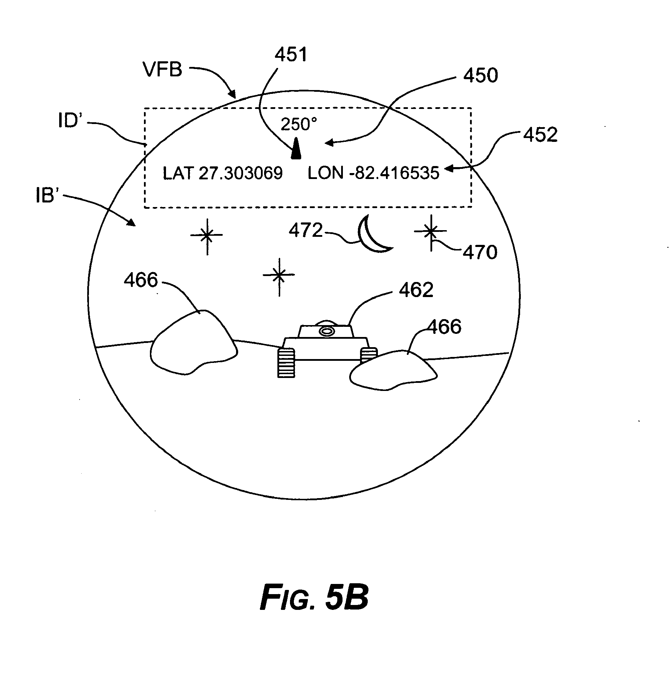

FIG. 5B is similar to FIG. 5A but also includes an example intensified scene image IB' in viewing field VB. Intensified scene image IB' is of a night landscape that includes a tank 462 among some rocks 466. Illumination light 404 is provided by stars 470 and moon 472.

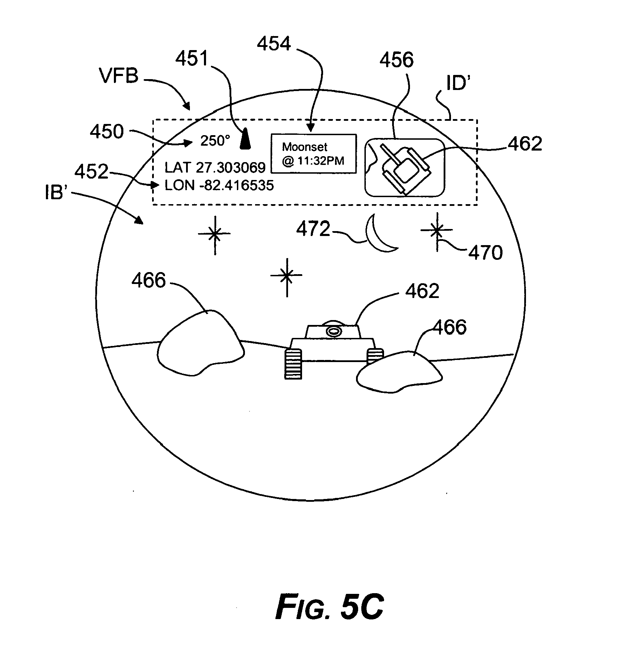

FIG. 5C is similar to FIG. 5B, but wherein intensified display image ID' includes additional external information embodied in external signal SE, such as example computer information and video information. The example computer information is represented by external electrical USB signal S2 and is shown as indicia 454 that says "moonset @ 11:32PM." The example video information is represented by external video signal S3 and is shown as video-streamed images 456 that might be taken from an aerial reconnaissance vehicle providing a real-time video stream of the scene (or a portion thereof) that is being viewed by viewer 410.

It will be apparent to those skilled in the art that various modifications and variations can be made to the present disclosure without departing from the spirit and scope of the disclosure. Thus, it is intended that the present disclosure cover the modifications and variations of this disclosure provided they come within the scope of the appended claims and their equivalents.
The invention comprises aspects which are disclosed in the sentences below, which are part of the description, but not claims in accordance with J15/88 of the Boards of Appeal

### Sentences:

1. An imager system for use with a viewing system having an objective lens and a viewing channel, comprising:
   a global positioning system (GPS)/power unit configured to provide electrical power and including a GPS unit configured to generate a GPS signal representative of GPS information;
   a display head electrically connected to the GPS/power unit and configured to receive the GPS signal and electrical power;
   a mounting device configured to adjustably and removably attach the display head to the viewing system; and
   the display head further comprising a compass unit configured to generate a compass signal representative of compass information, a display, a control electronics unit electrically connected to the compass unit and the display, the control electronics configured to control the display and compass unit, and an optical unit having a collimating lens that, in combination with the objective lens, defines an imaging optical system that forms a display image of the display within the viewing optical system so that the displayed GPS information and compass information is viewable over the viewing channel.
2. The imager system of sentence 1, wherein the viewing channel is image-intensified.
3. The imager system of sentence 2, wherein the viewing system comprises an image-intensified night-vision system.
4. The imager system of sentence 2, wherein the GPS/power unit further comprises at least one of a video port configured to receive an external video signal representative of video information, and a PC communication port configured to receive an external PC I/O signal representative of computer information, with at least one of the external video signal and external PC signal provided to the display head so that at least one of the video information and the computer information is displayed on the display for viewing over the viewing channel.
5. The imager system of sentence 1, wherein the display head is electrically connected to the GPS/power unit by an electrical cable.
6. The imager system of sentence 1, further comprising the GPS/power unit including a battery pack configured to operably contain at least one battery.
7. The imager system of sentence 1, further comprising the display head having an actuator unit electrically connected to the control electronic unit and configured to activate the display head.
8. The imager system of sentence 7, wherein the display has an adjustable brightness and further comprising the actuator unit being further configured to adjust the display brightness.
9. The imager system of sentence 7, wherein the imaging optical system includes a light-turning element operably supported within the display head.
10. An imager system for use with an image-intensified viewing system having an objective lens and an image-intensified viewing channel, comprising:
   a display head that includes an electronic compass that generates an electronic compass signal representative of compass information, a display, control electronics electrically connected to the display and the electronic compass, and an optical unit operably arranged relative to the display and that supports a collimating lens configured to combine with the objective lens to form an imaging optical system;
   a GPS/power unit electrically connected to the optical head via a cable and configured to generate and provide a GPS signal and electrical power to the optical head, the GPS signal being representative of GPS information; and
   wherein the control electronics is configured to receive the compass and GPS signals and display the compass information and GPS information on the display.
11. The imager system of sentence 10, further comprising:
   an adjustable mounting device configured to adjustably and removably mount the display head to the image-intensified viewing system.
12. The imager system of sentence 10, further comprising:
   the image-intensified viewing system having an image intensifier;
   the display head adjustably and removably mounted to the image-intensified viewing system so that the collimating lens and the object lens define the imaging optical system and form a display image on the image intensifier, which forms an intensified display image and an intensified scene image that are both viewable over the image-intensified viewing channel.
13. The imager system of sentence 12, wherein the display image includes external information provided through the GPS/power unit.
14. The imager system of sentence 13, further comprising the GPS/power unit having at least one port configured to receive an external signal representative of the external information, the external signal being relayed to the display head via the cable and displayed on the display.
15. A method of displaying GPS information and compass information over an image-intensified viewing channel of an image-intensified viewing system having an objective lens and an image intensifier, comprising:
   generating, in a display head, a compass signal representative of compass information;
   generating, in a GPS/power unit, a GPS signal representative of GPS information and sending the GPS signal to the display head;
   displaying the compass information and GPS information on a display within the display head;
   operatively arranging the display head relative to the objective lens; and
   optically communicating compass information and GPS information on the display to the image-intensified viewing system so that the GPS information and the compass information are viewable over the image-intensified viewing channel.
16. The method of sentence 15, further comprising:
   passing an external signal through the GPS/power unit to the display head, the external signal representative of external information; and
   displaying the external information on the display.
17. The method of sentence 16, further comprising the external signal representing at least one of computer information and video information.
18. The method of sentence 15, further comprising forming a display image on the image intensifier using a collimating lens within the display head in combination with the objective lens.
19. The method of sentence 18, further including providing the collimating lens with a light-turning element.
20. The method of sentence 15, further comprising operatively arranging the display head relative to the objective lens by adjustably and removably mounting the display head to an input-end portion of the image-intensified viewing system.
21. The method of sentence 15, further comprising generating the electrical power in the GPS/power unit using at least one battery operably housed in the GPS/power unit.
22. The method of sentence 15, further comprising the GPS/power unit either generating electrical power and providing the electrical power to the display head, or passing electrical power from an external power source to the display head.
23. The method of sentence 15, further comprising the image-intensified viewing channel including an intensified image of a scene that is viewable along with the compass information and the GPS information.

## Claims

1. An imager system for use with an image-intensified viewing system having an objective lens and an image-intensified viewing channel, comprising:
a display head that includes an electronic compass that generates an electronic compass signal representative of compass information, a display, control electronics electrically connected to the display and the electronic compass, and an optical unit operably arranged relative to the display and that supports a collimating lens configured to combine with the objective lens to form an imaging optical system;
a GPS/power unit electrically connected to the optical head via a cable and configured to generate and provide a GPS signal and electrical power to the optical head, the GPS signal being representative of GPS information; and
wherein the control electronics is configured to receive the compass and GPS signals and display the compass information and GPS information on the display.

2. The imager system of claim 1, further comprising:
an adjustable mounting device configured to adjustably and removably mount the display head to the image-intensified viewing system.

3. The imager system of at least one of the claims 1 to 2, further comprising:
the image-intensified viewing system having an image intensifier;
the display head adjustably and removably mounted to the image-intensified viewing system so that the collimating lens and the object lens define the imaging optical system and form a display image on the image intensifier, which forms an intensified display image and an intensified scene image that are both viewable over the image-intensified viewing channel.

4. The imager system of claim 3, wherein the display image includes external information provided through the GPS/power unit.

5. The imager system of claim 4, further comprising the GPS/power unit having at least one port configured to receive an external signal representative of the external information, the external signal being relayed to the display head via the cable and displayed on the display.

6. A method of displaying GPS information and compass information over an image-intensified viewing channel of an image-intensified viewing system having an objective lens and an image intensifier, comprising:
generating, in a display head, a compass signal representative of compass information;
generating, in a GPS/power unit, a GPS signal representative of GPS information and sending the GPS signal to the display head;
displaying the compass information and GPS information on a display within the display head;
operatively arranging the display head relative to the objective lens; and
optically communicating compass information and GPS information on the display to the image-intensified viewing system so that the GPS information and the compass information are viewable over the image-intensified viewing channel.

7. The method of claim 6, further comprising:
passing an external signal through the GPS/power unit to the display head, the external signal representative of external information; and
displaying the external information on the display.

8. The method of claim 7, further comprising the external signal representing at least one of computer information and video information.

9. The method of at least one of the claims 6 to 8, further comprising forming a display image on the image intensifier using a collimating lens within the display head in combination with the objective lens.

10. The method of claim 9, further including providing the collimating lens with a light-turning element.

11. The method of at least one of the claims 6 to 10, further comprising operatively arranging the display head relative to the objective lens by adjustably and removably mounting the display head to an input-end portion of the image-intensified viewing system.

12. The method of at least one of the claims 6 to 11, further comprising generating the electrical power in the GPS/power unit using at least one battery operably housed in the GPS/power unit.

13. The method of at least one of the claims 6 to 12, further comprising the GPS/power unit either generating electrical power and providing the electrical power to the display head, or passing electrical power from an external power source to the display head.

14. The method of at least one of the claims 6 to 13, further comprising the image-intensified viewing channel including an intensified image of a scene that is viewable along with the compass information and the GPS information.
